# EUROPEAN PATENT APPLICATION

(11) **EP 1 605 676 A1**
(43) Date of publication of application: **14.12.2005**
(21) Application number: 04076738.6
(22) Date of filing: 10.06.2004
(51) Int. Cl.: H04M 11/06

(54) **Filterless digital subscriber line system**

(71) Applicant: Nederlandse Organisatie voor Toegepast-Natuurwetenschappelijk Onderzoek TNO, 2628 VK Delft (NL)
(72) Inventor: van Leerdam, Huibert Steven, 3813 CL Amersfoort (NL)
(74) Representative: Winckels, Johannes Hubertus F.

(57) **Abstract**

Method for exchanging analog voice band signals and digital data signals between user termination equipment and a local exchange via conventional connection wires. The data signals are sent in the form of a carrier signal modulated by shift keying codes. At least when the user termination equipment or the local exchange are in a state to exchange said analog voice band signals, the data signals are sent in the form of shift keying codes having a restricted shift. The shift keying codes are limited to codes which result in a restricted offset of the modulated carrier signal, e.g. limited to shift keying codes having a restricted "Running Digital Sum" (RDS). The number of elements per code over which the RDS is calculated may be choosen thus that the frequency of the remaining, restricted carrier offset mainly lies outside the voice band. It may be detected whether or not the user termination or local exchange equipment are in a state to exchange said analog voice band signals, said limiting shift keying codes only being used during said state in which the analog voice band signals are exchanged.

## Description

### FIELD OF THE INVENTION

The invention refers to a "Digital Subscriber Line" (DSL) or "Asymmetric Digital Subscriber Line" (ADSL) system, providing that digital data and analogue telephony signals may be transported simultaneously by a conventionel wire pair between a subscriber and a local exchange. The data signal sent by the user termination equipment (e.g. DSL modem) or the local exchange equipment (e.g. DSLAM) respectively is converted into a carrier signal having a frequency spectrum outside the voice band.

### BACKGROUND OF THE INVENTION

For e.g. "always on" access to the Internet these days, (A)DSL connections are getting more and more popular. For combining and separation of the (relative high frequency) ADSL signals and the (voice band) telephony signals, frequency splitters may be used at both ends of the local loop. The current ADSL system may be somewhat "over-designed", making it suitable for a maximum downstream bit-rate of 8 Mbit/s. To achieve that bitrate the system uses a high bandwidth on the local loop and high transmit levels. The high transmit levels and the used modulation method (Discrete MultiTone, DMT), having very large amplitude peaks in the signal, require very good filters (splitters) to block these signals sufficiently to prevent that they disturb the telephony service. Another task for the splitters is to prevent disturbance of the ADSL signal by the (POTS) telephony signals. The splitters should have high suppression characteristics and thus require good filters. Moreover, the splitters have to be paid for, they have to be installed (at the user's and at the local exchange's side) and require more cabling to the local exchange's "Main Distribution Frame" (MDF) and at the user premises.

A splitter in the user's home may not be required as disclosed in WO99/29097. The disclosed digital subscriber line modem utilizes constant envelope modulated signals and frequency division multiplexing, where the constant envelope modulations lessens the intermodulation distortion products due to DSL signals that are transmitted by the modem and which may result in audible noise at the POTS telephone equipment due to non-linearities of the POTS telephone equipment.

However, despite the use of constant envelope modulation as proposed in the known system, without additional measures, part of the energy of the ADSL signal will still be transferred into the telephony voice band due to non-linear components in the telephone terminals and/or in the local exchange. Users can hear this as (a strong) noise in the user's telephone apparatus. On the side of the local exchange the noise will be added to the signal that is transmitted to the other (remote) telephony subscriber. In practice, filtering will be still necessary to limit voice band disturbance.

### SUMMARY OF THE INVENTION

The method proposed below aims to solve the problem as discussed in the previous chapter. One aspect is to code the data signals with (multilevel) PSK (or FSK) codes (e.g. code blocks) which, contrary to the prior art, are restricted w.r.t. the size and/or sign (+/-) of the phase transitions, viz. restricted to transitions which only cause minimal variations (deviations, impurities) in the low frequency (LF) part of the frequency spectrum of the offset (herinafter called LF offset) of the carrier signal, that could be transferred, due to non-linearities in e.g. the voice band equipment at the side of the user and/or the exchange, into LF noise in the telephony service.

Preferrably PSK or FSK codes (hereinafter generally called "SK codes) are used having a restricted "Running Digital Sum" (RDS). Limiting the RDS will minimize the carrier LF offset, resulting in lower disturbances in the POTS domain.

Preferrably the number of code elements of a code block or code frame over which the RDS is calculated will be choosen thus that the LF carrier offset mainly lies outside the audible telephone band.

Limiting audible noise at the telephone line by limiting the used SK code blocks will only be necessary during a telephone call. When the user's telephone terminal is "on-hook" (i.e. not in use), the measure of using a subset of (restricted) SK codes will not be necessary, resulting in a higher bit-rate than in the "off-hook" state of the telephone terminal (terminal in use) when only the restricted SK codes may be used. So, a higher mean bit rate may be performed when off-hook/on-hook detection is used to control the SK coding/decoding process.

### EXEMPLARY EMBODIMENT

The table below represents a simple example of the generation of a subset of SK codes having a restricted RDS per code block. In this example the phase transitions are restricted in size between -2 and +2.

| Candidate SK code block # | Candidate SK code block elements | | | RDS | OK if \|RDS\|≤3 NOK if \|RDS\|>3 | ←→ | Binary code block elements | | | | | | Binary code block # |
|---|---|---|---|---|---|---|---|---|---|---|---|---|---|
| | | | | | | | | | | | | | |
| **1** | 2 | 2 | 2 | 6 | NOK | | - | - | - | - | - | - | **-** |
| **2** | 2 | 2 | 1 | 5 | NOK | | - | - | - | - | - | - | **-** |
| **3** | 2 | 2 | 0 | 4 | NOK | | - | - | - | - | - | - | **-** |
| **4** | 2 | 2 | -1 | 3 | OK | ←→ | 0 | 0 | 0 | 0 | 0 | 0 | **1** |
| **5** | 2 | 2 | -2 | 2 | OK | ←→ | 0 | 0 | 0 | 0 | 0 | 1 | **2** |
| **6** | 2 | 1 | 2 | 5 | NOK | | - | - | - | - | - | - | **-** |
| **7** | 2 | 1 | 1 | 4 | NOK | | - | - | - | - | - | - | **-** |
| **8** | 2 | 1 | 0 | 3 | OK | ←→ | 0 | 0 | 0 | 0 | 1 | 0 | **3** |
| **9** | 2 | 1 | -1 | 2 | OK | ←→ | 0 | 0 | 0 | 0 | 1 | 1 | **4** |
| **10** | 2 | 1 | -2 | 1 | OK | ←→ | 0 | 0 | 0 | 1 | 0 | 0 | **5** |
| **11** | 2 | 0 | 2 | 4 | NOK | | - | - | - | - | - | - | **-** |
| **12** | 2 | 0 | 1 | 3 | OK | ←→ | 0 | 0 | 0 | 1 | 0 | 1 | **6** |
| **13** | 2 | 0 | 0 | 2 | OK | ←→ | 0 | 0 | 0 | 1 | 1 | 0 | **7** |
| **14** | 2 | 0 | -1 | 1 | OK | ←→ | 0 | 0 | 0 | 1 | 1 | 1 | **8** |
| **15** | 2 | 0 | -2 | 0 | OK | ←→ | 0 | 0 | 1 | 0 | 0 | 0 | **9** |
| **16** | 2 | -1 | 2 | 3 | OK | ←→ | 0 | 0 | 1 | 0 | 0 | 1 | **10** |
| **17** | 2 | -1 | 1 | 2 | OK | ←→ | 0 | 0 | 1 | 0 | 1 | 0 | **11** |
| **18** | 2 | -1 | 0 | 1 | OK | ←→ | 0 | 0 | 1 | 0 | 1 | 1 | **12** |
| **19** | 2 | -1 | -1 | 0 | OK | ←→ | 0 | 0 | 1 | 1 | 0 | 0 | **13** |
| **20** | 2 | -1 | -2 | -1 | OK | ←→ | 0 | 0 | 1 | 1 | 0 | 1 | **14** |
| **21** | 2 | -2 | 2 | 2 | OK | ←→ | 0 | 0 | 1 | 1 | 1 | 0 | **15** |
| **22** | 2 | -2 | 1 | 1 | OK | ←→ | 0 | 0 | 1 | 1 | 1 | 1 | **16** |
| **23** | 2 | -2 | 0 | 0 | OK | ←→ | 0 | 1 | 0 | 0 | 0 | 0 | **17** |
| **24** | 2 | -2 | -1 | -1 | OK | ←→ | 0 | 1 | 0 | 0 | 0 | 1 | **18** |
| **25** | 2 | -2 | -2 | -2 | OK | ←→ | 0 | 1 | 0 | 0 | 1 | 0 | **19** |
| **26** | 1 | 2 | 2 | 5 | NOK | | - | - | - | - | - | - | **-** |
| **27** | 1 | 2 | 1 | 4 | NOK | | - | - | - | - | - | - | **-** |
| **28** | 1 | 2 | 0 | 3 | OK | ←→ | 0 | 1 | 0 | 0 | 1 | 1 | **20** |
| **29** | 1 | 2 | -1 | 2 | OK | ←→ | 0 | 1 | 0 | 1 | 0 | 0 | **21** |
| **30** | 1 | 2 | -2 | 1 | OK | ←→ | 0 | 1 | 0 | 1 | 0 | 1 | **22** |
| **31** | 1 | 1 | 2 | 4 | NOK | | - | - | - | - | - | - | **-** |
| **32** | 1 | 1 | 1 | 3 | OK | ←→ | 0 | 1 | 0 | 1 | 1 | 0 | **23** |
| **33** | 1 | 1 | 0 | 2 | OK | ←→ | 0 | 1 | 0 | 1 | 1 | 1 | **24** |
| **34** | 1 | 1 | -1 | 1 | OK | ←→ | 0 | 1 | 1 | 0 | 0 | 0 | **25** |
| **35** | 1 | 1 | -2 | 0 | OK | ←→ | 0 | 1 | 1 | 0 | 0 | 1 | **26** |
| **36** | 1 | 0 | 2 | 3 | OK | ←→ | 0 | 1 | 1 | 0 | 1 | 0 | **27** |
| **37** | 1 | 0 | 1 | 2 | OK | ←→ | 0 | 1 | 1 | 0 | 1 | 1 | **28** |
| **38** | 1 | 0 | 0 | 1 | OK | ←→ | 0 | 1 | 1 | 1 | 0 | 0 | **29** |
| **39** | 1 | 0 | -1 | 0 | OK | ←→ | 0 | 1 | 1 | 1 | 0 | 1 | **30** |
| **40** | 1 | 0 | -2 | -1 | OK | ←→ | 0 | 1 | 0 | 1 | 1 | 0 | **31** |
| **41** | 1 | -1 | 2 | 2 | OK | ←→ | 0 | 1 | 0 | 1 | 1 | 1 | **32** |
| **42** | 1 | -1 | 1 | 1 | OK | ←→ | 1 | 0 | 0 | 0 | 0 | 0 | **33** |
| **43** | 1 | -1 | 0 | 0 | OK | ←→ | 1 | 0 | 0 | 0 | 0 | 1 | **34** |

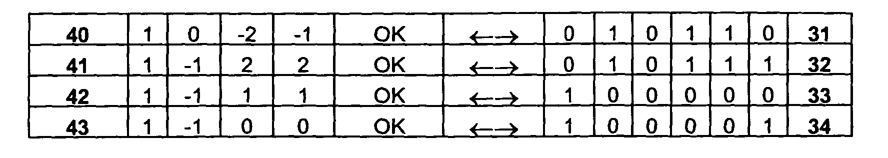

The above table comprises a number of candidate SK code blocks (1 - 43). The RDS of each SK code block is compared with the limit values, set to -3 and +3 in this example. If the RDS exceeds those borders -3 or +3 (|RDS|>3), the candidate SK code block is rejected ("NOK"). If the value of the RDS is not greater than +3 and not smaller than -3 (|RDS|≤3), the candidate SK code block is admitted ("OK") to the conversion table. For instance, the first candidate SK code block 2,2,2 (which means a series of three phase shifts of each two discrete phase shift steps of e.g. +45 degrees in a 8-SK environment) results in a RDS of 6. In the above example the threshold of |RDS| is set to 3 (-3≤RDS≤+3). The candidate SK code block is thus not alowable, giving too much LF noise -due to non-linear behavior of (semiconductor) components- in the telephone equipment. The same applies for candidates 2 and 3. The fourth and fifth candidate, however, are acceptable, while their RDS doesn't exceed the |RDS| threshold. So the fourth and fifth SK code block, 2,2,-1 (two times a double shift step forward, followed by a single phase shift step backward) and 2,2,-2 (two times a double shift step forward, followed by a double step backward). These admitted SK code blocks are linked (indicated in the table by: "←→") to the first and second binary code block <0,0,0,0,0,0,0> and <0,0,0,0,0,0,1> respectively. The sixth and seventh SK code again are not admissible due to their hight |RDS| values, but the eighth, ninth and tenth SK code are, and in consequence they are linked to the third, fourth and fifth binary code blocks <0,0,0,0,0,1,0>, <0,0,0,0,0,1,1> and <0,0,0,1,0,0,0> respectively. In this way a SK code block <-> binary code block conversion table may be constructed, containing a subset of SK code blocks having a limited RDS (and limited size of phase steps) and thus only causing a limited disturbing effect to the (LF) POTS/telephony domain.

It can easily be imagined that, in the same way as depicted above, tables may constructed of larger SK code blocks, code block frames etc., linked to binary code blocks, code block frames etc., within certain restrictions of the RDS of the used SK code blocks, code block frames etc., resulting in SK coding with minor disturbing effects in the POTS domain.

By choosing suitable parameters, the frequency content of the (limited) amplitude variations may be choosen thus that the audible noise, experienced by the user in his telephone equipment, is minimized, e.g. if the (LF) energy originated or induced by the DSL signal into the telephony service mainly has frequencies above the audible (voice) band. This may be perfomed by, as described above, limiting phase transitions and, moreover, by choosing a suitable code block length and a suitable RDS (RDS is small or zero). When e.g. a code block is "balanced" (RDS = 0), the SK symbol rate is defined as R SK symbols per second and the number of SK symbols per SK code block as M, then all LF noise will be above the frequency R/M (Hz). So a proper choice of R and M can accomplish that the noise frequency will be above the audible part. At the user side of the "local loop" of the telephone network, the limit of the audible frequency range is determined by both, the properties of the user's ear and the properties of the telephone set, resulting in a limit of about 8 to 12 kHz. At the local exchange side of the local loop the limit of the audible frequency range is determined by the properties of the filter in the PCM codec in the local exchange, resulting in a limit of about 4 kHz. For this reason, the code block lenght M at the local exchange's side could be choosen larger (without audible noise) than the block length at the local user's side. A larger M will result in a more efficient number of bits (binary codes) per code block, which may be advantageous as in DSL the downstream bitrate (transmitted from the local exchange to the user equipment) preferrably is higher than the upstream bitrate. When the RDS is between zero ("balanced") and the |RDS| threshold (set equal to three in the above example), which situation could be indicated as "nearly balanced", the majority of those nearly balanced SK code blocks will cause the main part of the noisy energy has a frequency above the value of R/M but at a lesser degree than in the situation of balanced code blocks.

Limiting audible noise at the telephone line by limiting SK code block in fact is only necessary during a telephone call. On detection of "on-hook" of the telephone terminal (terminal not in use), an SK code <-> binary code conversion table could be used which is not limited by an RDS threshold, resulting in a higher bit-rate. On detection of an "off-hook" status of the terminal, indicating that the telephony terminal is in use, only use may be made of the limited SK <-> binary conversion table, comprising only SK code blocks with restricted RDS values. Discriminating between "on-hook" and "off-hook", for controlling the SK coding/decoding process, thus will result into higher bit rates during on-hook and, consequently, into a higher over-all (mean) bit rate.

## Claims

1. Method for simultaneous exchange of analog voice band signals and digital data signals between user termination equipment and local exchange equipment via conventional connection wires, the data signals to be sent by the user termination equipment or the local exchange equipment respectively in the form of a carrier signal having a frequency spectrum above the voice band, the data signals being converted into shift keying codes modulating said carrier signal, the method comprising that, at least when the user termination equipment or the local exchange equipment are in a state to exchange said analog voice band signals, the data signals are sent in the form of shift keying codes having a restricted shift.

2. Method according to claim 1, wherein the used shift keying codes are limited to shift keying codes which result in a restricted offset of the modulated carrier signal.

3. Method according to claim 2, wherein the used shift keying codes are limited to shift keying codes having a restricted "Running Digital Sum" (RDS).

4. Method according to claim 2, wherein the number of code elements over which the RDS is calculated is choosen thus that the frequency content of the restricted carrier offset mainly lies outside the voice band.

5. Method according to claim 2, wherein it is detected whether or not the user termination equipment or the local exchange equipment are in a state to exchange said analog voice band signals, said limiting shift keying codes only being used during said state in which the analog voice band signals are exchanged.
